Europäisches Patentamt

European Patent Office

Office européen des brevets

(11) Numéro de publication: **0 166 311**
**A1**

(12) **DEMANDE DE BREVET EUROPEEN**

(21) Numéro de dépôt: 85107268.6

(22) Date de dépôt: 12.06.85

(51) Int. Cl.⁴: **A 61 C 13/265**

(30) Priorité: 21.06.84 CH 3002/84

(43) Date de publication de la demande: **02.01.86**
**Bulletin 86/1**

(84) Etats contractants désignés: **AT BE DE FR IT LU NL**

(71) Demandeur: **CENDRES ET METAUX S.A., 122, route de Boujean, CH-2501 Bienne (CH)**

(72) Inventeur: **Wermuth, Walter, Rue des Lilas 5, CH-2854 Bassecourt JU (CH)**
Inventeur: **Hahn, Rolf, Jardiliets 35, CH-2068 Hauterive NE (CH)**

(74) Mandataire: **Finck, Dieter et al, Patentanwälte v. Füner, Ebbinghaus, Finck Mariahilfplatz 2 & 3, D-8000 München 90 (DE)**

(54) **Attachement dentaire.**

㉗ L'élément (2) de l'attachement est destiné à être rendu solidaire de la partie amovible de la prothèse. A cet effet, il est logé dans un boîtier (3) qui vient lui-même s'intégrer dans ladite partie de la prothèse soit par le procédé de cire perdue, soit par polymérisation, soit encore par une coulée de raccord. Le boîtier (3) constitue l'organe de positionnement et le moyen intermédiaire de fixation de l'élément (2) dans la partie amovible de la prothèse.

CENDRES & METAUX S.A.          EPAC-32841.6
                               12 juin 1985

## ATTACHEMENT DENTAIRE

On utilise en médecine dentaire des attachements pour relier entre elles la partie fixe et la partie amovible des prothèses. Ces attachements sont généralement formés de deux éléments complémentaires coopérant entre eux dont l'un est ancré totalement ou partiellement dans la partie fixe de la prothèse et dont l'autre est destiné à être rendu solidaire de la partie amovible de la prothèse. Tantôt l'élément de l'attachement ancré totalement ou partiellement dans la partie fixe de la prothèse est un élément femelle dans la mesure où il sert de logement à l'autre élément de l'attachement, mâle celui-ci, qui est destiné à être rendu solidaire de la partie amovible de la prothèse, tantôt l'élément de l'attachement ancré totalement ou partiellement dans la partie fixe de la prothèse est un élément mâle dans la mesure où il vient se loger dans l'autre élément de l'attachement, femelle celui-ci, qui est destiné à être rendu solidaire de la partie amovible de la prothèse.

Si l'ancrage de l'élément correspondant de l'attachement dans la partie fixe de la prothèse ne pose généralement pas de problème particulier, il n'en va pas de même de la fixation de l'autre élément de l'attachement dans la partie amovible de la prothèse. Cette partie est généralement constituée d'un squeletté métallique qui lui sert de base. Dans l'état actuel de la technique, l'élément de l'attachement en cause est le plus souvent fixé au squeletté par brasage. Cela n'est pas satisfaisant à deux titres essentiels. D'une part, l'opération de brasage est difficile, délicate, peu fiable et présente un important risque d'imprécision. D'autre part, l'unité réalisée après l'opération de brasage a un caractère perdurable peu souhaitable en ce sens que l'élément concerné de l'attachement n'est pas interchangeable par rapport au squeletté, respectivement à la partie amovible de la prothèse. Or, cette interchangeabilité semble nécessaire compte tenu notamment de l'usure des surfaces de friction dudit élément ensuite de l'insertion et de la désinsertion journalières de la prothèse et du risque d'une cassure de l'élément ensuite d'une surcharge.

La présente invention vise à obvier aux inconvénients prédécrits résultant du brasage au squeletté d'un des éléments de l'attachement.

Ce but est atteint par les moyens définis dans la revendication.

Le dessin annexé représente, à titre d'exemple, trois formes d'exécution possible de l'attachement selon l'invention.

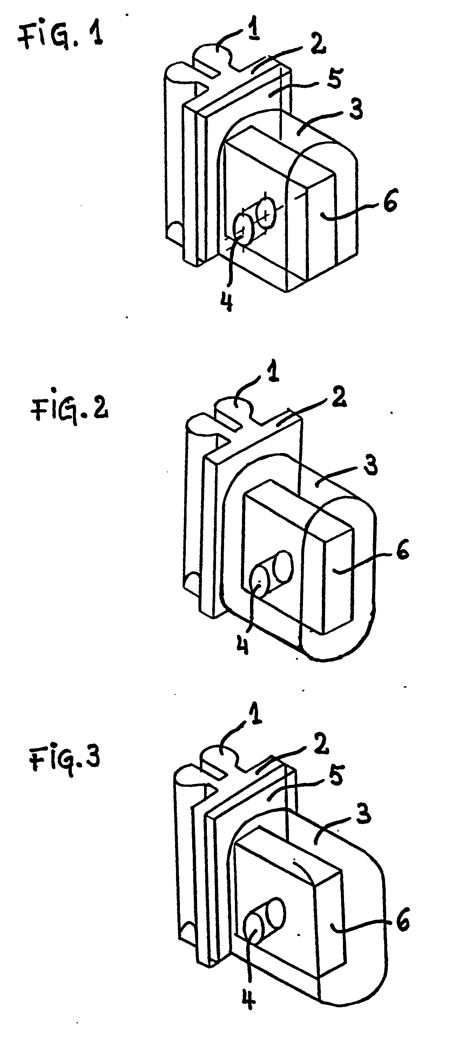

Les figures 1 à 3 sont des vues d'ensemble d'attachements partiellement représentés.

L'attachement est formé de deux éléments dont l'un, non représenté, est ancré totalement dans la partie fixe de la prothèse et dont l'autre 2 est destiné à être rendu solidaire de la partie amovible de la prothèse. L'élément 2, mâle en l'occurence, plus précisément la tête 1 de celui-ci, vient s'insérer dans l'élément non représenté, femelle en l'occurence, de forme complémentaire dans lequel il est retenu par une force de friction. L'élément 2 présente en outre un corps 6 par lequel il est destiné à être rendu solidaire du squeletté qui constitue la base de la partie amovible de la prothèse.

Le corps 6 de l'élément 2 est logé dans un boîtier 3 de forme interne correspondante à celle externe du corps 6 et de forme externe sensiblement ovoïdale. Dans la figure 1, le boîtier 3 est ouvert à la base et sur sa face postérieure, tandis que dans la figure 2, il est fermé à la base et dans la figure 3, il est fermé sur sa face postérieure.

Le boîtier 3 peut notamment comporter un passage latéral 4 ainsi que, sur sa face frontale et de façon solidaire, un contre corps 5 à l'élément 2.

Lorsque le boîtier 3 est en matière calcinable, il peut être coulé en métal avec le squeletté de la partie amovible de la prothèse par le procédé de cire perdue. Dans ce cas, le boîtier disparaît dans sa façon originale pour faire place à un boîtier de même façon mais d'une matière différente, directement intégré dans le squeletté de la partie amovible de la prothèse.

Le boîtier 3 en matière plastique qui présente les caractéristiques adéquates peut être polymérisé dans la résine de la partie amovible de la prothèse. Dans ce cas, le boîtier 3 est indirectement intégré dans la partie amovible de la prothèse en tant qu'élément constitutif.

En métal, le boîtier 3 peut être assemblé au squeletté de la partie amovible de la prothèse par une coulée de raccord. Dans ce cas également, le boîtier 3 est indirectement intégré dans la partie amovible de la prothèse, plus précisément dans le squeletté, en tant qu'élément constitutif.

Dans une forme d'exécution particulièrement avantageuse, le boîtier 3 sera susceptible d'adaptation à la plupart des attachements connus. Cependant, il y aura souvent divergence de forme entre le logement du boîtier 3 et l'élément de l'attachement destiné à prendre place dans ce logement. Pour pallier cet inconvénient, le boîtier 3 comportera, dans la région de son sommet, un orifice débouchant dans le logement. On comblera ladite divergence de forme par de la cire ou une autre matière calcinable introduite dans le boîtier 3 par l'orifice en question.

De forme externe sensiblement ovoïdale à surface lisse, le boîtier 3 restera facilement pris, par effet de succion, dans la masse à doubler (gel) couramment utilisée dans le dommaine dentaire pour constituer des empreintes ou pourra être facilement repositionné dans ladite masse. Rien n'empêche cependant le boîtier 3 de présenter, sur sa forme externe, des aspérités ou des organes de retenue si son intégration dans la partie amovible de la prothèse s'en trouve ainsi facilitée.

L'élément 2 de l'attachement logé dans le boîtier 3 peut évidemment être fixé dans celui-ci par collage. D'autres moyens peuvent également entrer en ligne de compte, par exemple une goupille ou une vis qui traverserait le boîtier 3 et l'élément 2 par le passage latéral 4 dans le boîtier 3 ou une bague de retenue en métal ou en caoutchouc

- 6 -

0166311

placée à l'intérieur du boîtier 3 entre celui-ci et l'élément 2.

L'obturation par exemple par des pièces de forme en céramique ou le renforcement par exemple par des douilles en
alliage supportant les coulées de raccord du passage 4
dans le boîtier 3 permet de conserver à ce passage son
caractère de gabarit pour la fixation de l'élément 2 dans
le boîtier 3 par le moyen de la goupille ou de la vis
précitée.

Les avantages principaux de l'attachement selon l'invention sont nombreux. Parmi les principaux, on peut signaler l'interchangeabilité de l'élément 2 de l'attachement
logé dans le boîtier 3, la suppression de l'opération de
brasage entre l'élément 2 de l'attachement et le squeletté de la partie amovible de la prothèse ce qui, a fortiori,
procure une totale indépendance s'agissant de la matière
utilisée pour l'attachement et pour la prothèse et une plus
grande précision ainsi qu'un abaissement sensible du prix
de revient lors de la réalisation de la prothèse en laboratoire.

0166311

- 7 -

REVENDICATIONS

1. Attachement dentaire pour relier entre elles la partie fixe et la partie amovible d'une prothèse, formé de deux éléments complémentaires coopérant entre eux dont l'un est ancré totalement ou partiellement dans la partie fixe de la prothèse et dont l'autre (2) est destiné à être rendu solidaire de la partie amovible de la prothèse, caractérisé en ce que ce dernier élément (2) est logé en tout ou en partie dans un boîtier (3) de forme interne sensiblement correspondante à celle externe du dit élément (2) et de forme externe sensiblement ovoïdale qui constitue l'organe de positionnement et le moyen intermédiaire de fixation de l'élément (2) dans la partie amovible de la prothèse dans laquelle le boîtier (3) vient s'intégrer.

2. Attachement dentaire selon la revendication 1, caractérisé en ce que le boîtier (3) est en matière calcinable pour être coulé en métal avec le squeletté de la partie amovible de la prothèse par le procédé de cire perdue.

3. Attachement dentaire selon la revendication 1, caractérisé en ce que le boîtier (3) est en matière plastique pour être polymérisé dans la résine de la partie amovible de la prothèse.

4. Attachement dentaire selon la revendication 1, caractérisé en ce que le boîtier (3) est en métal pour être assemblé au squeletté de la partie amovible de la prothèse par une coulée de raccord.

5. Attachement dentaire selon la revendication 1 et selon l'une des revendications 2, 3 et 4, caractérisé en ce que le boîtier comporte au moins un passage latéral (4) susceptible d'être obturé ou renforcé.

6. Attachement dentaire selon la revendication 1 et selon l'une des revendications 2, 3 et 4, voire la revendication 5, caractérisé en ce que le boîtier (3) comporte, dans la région de son sommet, un orifice débouchant dans son logement.

7. Attachement dentaire selon la revendication 1 et selon l'une des revendications 2, 3 et 4, voire l'une ou l'autre des renvendications 5 et 6, caractérisé en ce que le boîtier (3) comporte, sur sa face frontale et de façon solidaire, un contre corps (5) à l'élément de l'attachement qu'il loge.

8. Attachement selon la revendication 1 et selon l'une des revendications 2, 3 et 4, voire l'une ou l'autre des revendications 5, 6 et 7, caractérisé en ce que la forme externe du boîtier (3) présente une surface polie.

9. Attachement selon la revendication 1 et selon l'une des revendications 2, 3 et 4, voire l'une ou l'autre des revendications 5, 6 et 7, caractérisé en ce que la forme externe du boîtier (3) présente des aspérités ou des organes de retenue.

10. Attachement selon la revendication 1 et selon l'une des revendications 2, 3 et 4, voire l'une ou l'autre des revendications 5, 6 et 7, 8 ou 9, caractérisé en ce que celui de ses éléments logé dans le boîtier est fixé dans ce dernier par collage.

11. Attachement selon la revendication 1 et selon l'une des revendications 2, 3 et 4, voire l'une ou l'autre des revendications 5, 6 et 7, 8 ou 9, caractérisé en ce que celui de ses éléments (2) logé dans le boîtier (3) est fixé mécaniquement dans ce dernier, soit par un moyen de retenue simple ou composé, oblong et rigide, soit par un moyen à vis qui traverse au moins partiellement et respectivement le boîtier (3) et l'élément (2), soit encore par un quelconque moyen à ressort ou un corps élastique.

FIG. 1

FIG. 2

FIG. 3

1/1

0166311

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 085 781 (PEDRAZZINI)<br><br>* revendications 1, 13, 14; page 11, ligne 18 - page 13, ligne 29; figures 4-8 * | 1,2,5, 6,11 | A 61 C 13/265 |
| | --- | | |
| A | FR-A-1 584 920 (MARTINELLI et al.)<br>* figures 1-4 * | 1 | |
| | --- | | |
| A | FR-A-2 290 879 (BUSSER)<br>* figures 2, 3 * | 1 | |
| | --- | | |
| A | US-A-4 196 516 (POVEROMO)<br>* figures 1, 6 * | 7,9 | |
| | --- | | DOMAINES TECHNIQUES RECHERCHES (Int. Cl.4) |
| A | US-A-3 117 377 (POVEROMO)<br>* colonne 3, lignes 40-42; figure 7 * | 10 | A 61 C 13/00 |
| | ----- | | |

Le present rapport de recherche a été établi pour toutes les revendications

| Lieu de la recherche | Date d'achèvement de la recherche | Examinateur |
|---|---|---|
| BERLIN | 10-09-1985 | SIMON J J P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82